(19) Europäisches Patentamt
European Patent Office
Office européen des brevets

(11) **EP 1 209 188 B1**

(12) **EUROPÄISCHE PATENTSCHRIFT**

(45) Veröffentlichungstag und Bekanntmachung des Hinweises auf die Patenterteilung:
**22.02.2006 Patentblatt 2006/08**

(51) Int Cl.:
***C08J 7/06*** *(2006.01)* *C08L 23/12* *(2006.01)*

(21) Anmeldenummer: **01127190.5**

(22) Anmeldetag: **16.11.2001**

(54) **Verfahren zur Herstellung von Polypropylen-basierten Formkörpern, Fasern und Folien**

Process for manufacturing articles, fibres or films based on polypropylene

Procédé pour la fabrication d'articles, fibres et péllicules à base de polypropylène

(84) Benannte Vertragsstaaten:
**AT BE CH CY DE DK ES FI FR GB GR IE IT LI LU MC NL PT SE TR**

(30) Priorität: **25.11.2000 DE 10058648**

(43) Veröffentlichungstag der Anmeldung:
**29.05.2002 Patentblatt 2002/22**

(73) Patentinhaber: **Cognis Deutschland GmbH & Co. KG**
**40789 Monheim (DE)**

(72) Erfinder:
- **Birnbrich, Paul, Dr.**
**42719 Solingen (DE)**
- **Klamann, Jörg-Dieter, Dr.**
**27574 Bremerhaven (DE)**
- **Mathis, Raymond, Dr.**
**40627 Düsseldorf (DE)**
- **Wucherpfennig, Sven**
**40597 Düsseldorf (DE)**

(56) Entgegenhaltungen:
**DE-A- 19 851 689** **US-A- 4 225 644**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 209 188 B1

## Beschreibung

### Gebiet der Erfindung

Die Erfindung betrifft ein Verfahren zur Herstellung von Polypropylen-basierten Formkörpern, Fasern und Folien. Die nach diesem Verfahren zugänglichen Formkörper, Fasern und Folien zeichnen sich durch eine dauerhafte Verbesserung der Hydrophilie der Oberflächen der Formkörper, Fasern und Folien aus. Dadurch wird die Kompatibilität dieser Oberflächen gegenüber Klebstoffen, Beschichtungsmasen (beispielsweise Lacken), Farbstoffen und Druckfarben erheblich verbessert.

### Stand der Technik

Formgestaltete Werkstücke beliebiger Raumform, einschließlich Formkörpern, Fasern und Folien auf Polyolefinbasis finden heute in breitestem Umfange praktische Verwendung. Ein wichtiger Problembereich liegt hier in der Verbesserung der Oberflächeneigenschaften dieser aufgrund ihrer Struktur unpolaren Kohlenwasserstoffverbindungen. So ist die mangelnde Haftfestigkeit gegenüber Beschichtungen und Verklebungen ein zentrales Problem, zu dessen Lösung seit Jahrzehnten zahlreiche Vorschläge gemacht worden sind.

Es ist bekannt, daß die Kompatibilität der Kunststoff-Oberfläche gegenüber Beschichtungen und Verklebungen durch beispielsweise oxidative Nachbehandlungsverfahren wie Corona- oder Plasmabehandlung verbessert werden kann. Hierbei wird der Kunststoff in Gegenwart von Gasen und Entladungen an der Oberfläche oxidiert oder chemisch modifiziert, wodurch sich gewisse Oberflächen-Eigenschaften des Kunststoffs modifizieren lassen. Diese Methoden erfordern jedoch neben einem hohen Energieeinsatz stets einen zusätzlichen Arbeitsgang und führen zu Ozonemissionen bei der Fertigung von Kunststoffteilen. Daneben sind chemische Vorbehandlungsverfahren wie z.B. das Behandeln mit Fluor- oder Chlorgas, mit Chromschwefelsäure oder Fluorsulfonsäure, usw. seit längerem bekannt.

**WO 97/12694** und **WO 98/42776** beschreiben die Verwendung von Amphiphilen zur dauerhaften Verbesserung der Klebstoff- und/oder Beschichtungs-Kompatibilität von Polyolefin-basierten Formkörpern, Fasern und Folien. Dabei unterwirft man eine Mischung enthaltend (a) überwiegend ein oder mehrere Polyolefine, (b) ein oder mehrere migrationsfähiger Amphiphile und (c) ein oder mehrere Übergangsmetall-Verbindungen, bei Temperaturen im Bereich von 180 bis 320 °C auf übliche Weise einer formgebenden Verarbeitung, beispielsweise der Extrusion. Es ist offenbart, daß als Komponente b) insbesondere Dialkanolamide ungesättigter Fettsäuren, etwa Ölsäurediethanolamid oder Linolsäurediethanolamid, eingesetzt werden können.

**WO 00/29475** beschreibt die Verwendung von speziellen Fettsäureamiden auf Basis gesättigter Fettsäuren zur dauerhaften Verbesserung der Klebstoff- und/oder Beschichtungs-Kompatibilität von Polyolefin-basierten Formkörpern, Fasern und Folien. Dabei werden gute Ergebnisse insbesondere bei Polyethylen-basierten Formkörpern erzielt.

### Beschreibung der Erfindung

**Aufgabe** der vorliegenden Erfindung war es, Arbeitsmittel bereitzustellen, mit denen eine Verbesserung der Hydrophilie der Oberflächen von Poly**propylen**-basierten Formkörpern, Fasern und Folien erzielt wird und zwar mit der Folge einer nachhaltigen und dauerhaften Verbesserung der Kompatibilität dieser Oberflächen gegenüber Klebstoffen, Beschichtungsmassen (beispielsweise Lacken), Farbstoffen und Druckfarben.

Gegenstand der vorliegenden Erfindung ist ein **Verfahren** zur Herstellung von Polypropylen-basierten Formkörpern, Fasern und Folien, wobei man eine Mischung enthaltend

a) überwiegend ein oder mehrere Polypropylene und

b) 0,01 bis 5 Gew.-% - bezogen auf die Polypropylene - ein oder mehrere Kunststoff-Additive und

c) 0 oder 0,1 bis 1000 ppm ein oder mehrerer Übergangsmetallverbindungen - Metallgehalt der Übergangsmetallverbindungen bezogen auf die Polypropylene -

bei Temperaturen im Bereich von 180 bis 330 °C auf übliche Weise einer formgebenden Verarbeitung wie Extrusions-, Kalandrier-, Spritzguß-, Blasformverfahren und dergleichen unterwirft und die auf diese Weise hergestellten Formkörper, Fasern und Folien anschließend einer 2-stufigen Nachbehandlung unterwirft, indem man die Formkörper, Fasern und Folien.

- zunächst einer Tauchbehandlung in einem Bad enthaltend mindestens ein organisches Lösungsmittel und 0,1 bis 100 Gew.-% - bezogen auf die Gesamtmenge des Lösungsmittels - mindestens einer Verbindung d), die ein- oder

mehrfach die Struktureinheit $-CH_2-CH=CH-$ enthält und 0,01 bis 5 Gew.-% - bezogen auf die Gesamtmenge des Lösungsmittels - mindestens einer Übergangsmetallverbindung

und anschließend

- einer Temperaturbehandlung

unterzieht.

Zum Begriff der Übergangsmetalle

Unter "Übergangsmetallen" werden im Rahmen der vorliegenden Erfindung alle Übergangsmetalle im engeren Sinne verstanden (vergl. z.B. Römpps Chemie-Lexikon, Stuttgart 1977, S. 3717), darüber hinaus die Metalle Zinn (Sn), Blei (Pb), Kupfer (Cu) und Zink (Zn).

Zu den Übergangsmetallverbindungen

Wie bereits gesagt können die Verbindungen b) bei der formgebenden Verarbeitung der Polypropylene a) gewünschtenfalls in Kombination mit Übergangsmetall-Verbindungen c) eingesetzt werden. Dabei beträgt die Menge der Übergangsmetall-Verbindung - Metallgehalt der Übergangsmetall-Verbindung bezogen auf die Polypropylene - 0,1 bis 1000 ppm. Im Hinblick auf die Art der Übergangsmetall-Verbindungen besteht dabei an sich keine besondere Einschränkung. Demnach können im Rahmen der Lehre der vorliegenden Erfindung prinzipiell alle dem Fachmann bekannten Übergangsmetallverbindungen eingesetzt werden. In einer Ausführungsform setzt man als Übergangsmetall-Verbindungen Übergangsmetallsalze ein, vorzugsweise Salze auf Basis von organischen Säuren mit 6 bis 22 C-Atomen. In einer weiteren Ausführungsform setzt man die Übergangsmetall-Verbindungen in einer - Menge ein, die unterhalb von 5 ppm - Metallgehalt der Übergangsmetall-Verbindung bezogen auf die Polypropylene - liegt. In einer weiteren Ausführungsform setzt man solche Übergangsmetallverbindungen c) ein, deren Metalle aus der Gruppe Cu, Zn, Co, Zr, Fe, Pb, Mn, Ni, Cr, V, Ce, Ti und Sn gewählt sind.

Der Klarheit halber sei festgestellt, daß die Übergangsmetallverbindungen, die im Zuge der Tauchbehandlung eingesetzt werden können, dieselben sind, aus denen man - wie oben dargestellt - auswählen kann, um sie bei der formgebenden Verarbeitung einzusetzen.

Zu den Polypropylenen

Für die erfindungsgemäße Lehre besonders geeignete Polymertypen sind in der nachfolgenden Zusammenstellung aufgezählt: Isotaktisches Polypropylen; syndiotaktisches Polypropylen; Metallocen-katalysiert hergestelltes Polypropylen, schlagzähmodifiziertes Polypropylen.

Zu den Kunststoffadditiven

Die Art der Kunststoffadditive unterliegt an sich keinen besonderen Beschränkungen. Im Prinzip kommen daher alle dem Fachmann einschlägig bekannten Kunststoffadditive in Betracht. Hierfür sei beispielhaft auf das Standardwerk **Gächter/Müller "Kunststoff-Additive" (München 1989)** verwiesen. Geeignete Kunststoffadditive sind etwa:

**beta-Diketone und beta-Ketoester.** Verwendbare 1,3-Dicarbonylverbindungen können lineare oder cyclische Dicarbonylverbindungen sein. Bevorzugt werden Dicarbonylverbindungen der folgenden Formel eingesetzt

$$R^1\text{-CO-CHR}^2\text{-CO-R}^3,$$

worin bedeuten:

- $R^1$: $C_1$-$C_{22}$-Alkyl, $C_5$-$C_{10}$-Hydroxyalkyl, $C_2$-$C_{18}$-Alkenyl, Phenyl, durch OH, $C_1$-$C_4$-Alkyl, $C_1$-$C_4$-Alkoxy oder Halogen substituiertes Phenyl, $C_7$-$C_{10}$-Phenylalkyl, $C_5$-$C_{12}$-cycloalkyl, durch $C_1$-$C_4$-Alkyl substituiertes $C_5$-$C_{12}$-Cycloalkyl oder eine Gruppe $-R^5$-S-$R^6$ oder $-R^5$-O- $R^6$,
- $R^2$: Wasserstoff, $C_1$-$C_8$-Alkyl, $C_2$-$C_{12}$-Alkenyl, Phenyl, $C_7$-$C_{12}$-Alkylphenyl, $C_7$-$C_{10}$-Phenylalkyl oder eine Gruppe -CO- $R^4$,
- $R^3$: eine der für $R^1$ gegebenen Bedeutungen oder $C_1$-$C_{18}$-Alkoxy,
- $R^4$: $C_1$-$C_4$-Alkyl oder Phenyl,
- $R^5$: $C_1$-$C_{10}$-Alkylen,

- $R^6$: $C_1$-$C_{12}$-Alkyl, Phenyl, $C_7$-$C_{18}$-Alkylphenyl oder $C_7$-$C_{10}$ -Phenylalkyl.

Hierzu gehören die Hydroxylgruppen enthaltenden Diketone der EP-346 279 und die Oxa- und Thia-diketone der EP-307 358 ebenso wie die auf Isocyansäure basierenden Ketoester der US 4,339,383.

$R^1$ und $R^3$ als Alkyl können insbesondere $C_1$-$C_{18}$-Alkyl sein, wie z.B. Methyl, Ethyl, n-Propyl, Isopropyl, n-Butyl, tert Butyl, Pentyl, Hexyl, Heptyl, Octyl, Decyl, Dodecyl oder Octadecyl.

$R^1$ und $R^3$ als Hydroxyalkyl stellen insbesondere eine Gruppe $-(CH_2)_n-OH$ dar, worin n 5, 6 oder 7 ist.

$R^1$ und $R^3$ als Alkenyl können beispielsweise Vinyl, Allyl, Methallyl, 1-Butenyl, 1-Hexenyl oder Oleyl bedeuten, vorzugsweise Allyl.

$R^1$ und $R^3$ als durch OH, Alkyl, Alkoxy oder Halogen substituiertes Phenyl können beispielsweise Tolyl, Xylyl, tertButylphenyl, Methoxyphenyl, Ethoxyphenyl, Hydroxyphenyl, Chlorphenyl oder Dichlorphenyl sein.

$R^1$ und $R^3$ als Phenylalkyl sind insbesondere Benzyl.

$R^2$ und $R^3$ als Cycloalkyl oder Alkyl-cycloalkyl sind insbesondere Cyclohexyl oder Methylcyclohexyl.

$R^2$ als Alkyl kann insbesondere $C_1$-$C_4$-Alkyl sein. $R^2$ als $C_2$-$C_{12}$-Alkenyl kann insbesondere Allyl sein. $R^2$ als Alkylphenyl kann insbesondere Tolyl sein. $R^2$ als Phenylalkyl kann insbesondere Benzyl sein. Vorzugsweise ist $R^2$ Wasserstoff. $R^3$ als Alkoxy kann z.B. Methoxy, Ethoxy, Butoxy, Hexyloxy, Octyloxy, Dodecyloxy, Tridecyloxy, Tetradecyloxy oder Octadecyloxy sein. $R^5$ als $C_1$-$C_{10}$-Alkylen ist insbesondere $C_2$-$C_4$-Alkylen. $R^6$ als Alkyl ist insbesondere $C_4$-$C_{12}$-Alkyl, wie z.B. Butyl, Hexyl, Octyl, Decyl oder Dodecyl. $R^6$ als Alkylphenyl ist insbesondere Tolyl. $R^6$ als Phenylalkyl ist insbesondere Benzyl.

Beispiele für 1,3-Dicarbonylverbindungen der obigen Formel sind Acetylaceton, Butanoylaceton, Heptanoylaceton, Stearoylaceton, Palmitoylaceton, Lauroylaceton, Benzoylaceton, Dibenzoylmethan, Lauroylbenzoylmethan, Palmitoylbenzoylmethan, Stearoyl-benzoylmethan, Isooctylbenzoylmethan, 5-Hydroxycapronyl-benzoylmethan, Tribenzoylmethan, Bis(4-methylbenzoyl)methan, Benzoyl-p-chlorbenzoylmethan, Bis(2-hydroxybenzoyl)methan, 4-Methoxybenzoyl- benzoylmethan, Bis(4-methoxybenzoyl)methan, 1-Benzoyl-1-acetylnonan, Benzoyl-acetyl-phenylmethan, Stearoyl-4-methoxybenzoylmethan, Bis(4-tert-butylbenzoyl)methan, Benzoylformylmethan, Benzoyl-phenylacetylmethan, Bis-cyclohexanoyl-methan, Di-pivaloyl-methan, 2-Acetylcyclopentanon, 2-Benzoylcyclo-pentanon, Diacetessigsäuremethyl-, -ethyl- und - allylester, Benzoyl-, Propionyl- und Butyryl-acetessigsäuremethyl- und - ethylester, Triacetylmethan, Acetessigsäuremethyl-, -ethyl- , -hexyl-, -octyl-, -dodecyl- oder -octadecylester, Benzoylessigsäuremethyl- , -ethyl-, -butyl-, -2-ethylhexyl-, - dodecyl- oder - octadecylester, sowie Propionyl- und Butyrylessigsäure-$C_1$-$C_{18}$- alkylester. Stearoylessigsäureethyl-, -propyl-, -butyl-, -hexyl- oder -octylester sowie mehrkernige β-Ketoester wie in EP 433.230 beschrieben und Dehydracetsäure sowie deren Zink-, Magnesium- oder Alkalisalze.

Bevorzugt sind 1,3-Diketoverbindungen der obigen Formel, worin $R^1$ $C_1$-$C_{18}$-Alkyl, Phenyl, durch OH, Methyl oder Methoxy substituiertes Phenyl, $C_7$-$C_{10}$-Phenylalkyl oder Cyclohexyl ist, $R^2$ Wasserstoff ist und $R^3$ eine der für $R^1$ gegebenen Bedeutungen hat.

Die 1,3-Dicarbonylverbindungen der obigen Formel können alleine, als Mischungen und/oder als deren Alkali-, Erdalkali- und Zinkchelate eingesetzt werden.

**Polyole und Polyolerivate.** Als Polyole besonders geeignet sind beispielsweise Pentaerythrit, Dipentaerythrit, Tripentaerythrit, Bistrimethylolpropan, Inosit, Polyvinylalkohol, Bistrimethylolethan, Trismethylolpropan, Sorbit, Maltit, Isomaltit, Lactit, Lycasin, Mannit, Lactose, Leucrose, Tris-(hydroxylethyl)isocyanurat (THEIC), Palatinit, Tetramethylolcyclohexanol, Tetramethylolcyclopentanol, Tetramethylolcyclopyranol, Glycerin, Diglycerin, Polyglycerin oder Thiodiglycerin sowie Umsetzungsprodukte dieser Polyole mit Ethylenoxid und/oder Propylenoxid.
Die Polyole können gewünschtenfalls an einer oder an mehreren OH-Gruppen verestert oder verethert sein. Bevorzugt sind solche Polyolderivatae, die Ester von Polyolen mit Carbonsäuren darstellen, etwa Glycerinpartialester von Fettsäuren, beispielsweise Glycerinmonooleat, Glycerindioleat, Glycerinmonostearat, Glycerindistearat, Pentaerytrit- oder TMP-Partialester oder Ester von Dicarbonsäuren (z.B. Adipinsäure, Maleinsäure) mit Polyolen wie Pentaerythrit, Glycerin oder Trismethylolpropan.
Die Polyole bzw. Polyolderivate können allein oder in Mischung untereinander eingesetzt werden.

**Sterisch gehindete Amide** (Tetraalkylpiperidinverbindungen). Hierfür sei ausdrücklich auf Seite 7, Zeile 22 bis Seite 25, Zeile 21, von EP-A-768 336 verwiesen. Die dort genannten sterisch gehinderten Amine werden in die Offenbarung der vorliegenden Erfindung ausdrücklich mit einbezogen.

**Antioxidantien.** Hierfür sei ausdrücklich auf Seite 3 i, Zeile 34 bis Seite 33, Zeile 4, der oben zitierten EP-A-768 336 verwiesen. Die dort genannten Antioxidantien werden in die Offenbarung der vorliegenden Erfindung ausdrücklich mit einbezogen.

**Gleitmittel und Trennmittel.** In diesem Zusammenhang sei ausdrücklich festgestellt, daß sowohl Gleitmittel als auch Trennmittel, als auch Gemische von Gleit- und Trennmitteln eingesetzt werden können. Nach dem üblichen Sprachgebrauch des Fachmanns bezeichnet man solche Produkte als Trennmittel, die die Reibungswiderstände überwiegend zwischen Polymerschmelze und Stahloberfläche der bei der formgebenden Verarbeitung eingesetzten Maschine reduzieren; die Reduktion des Reibungswiderstandes hat zur Folge, daß der Massedruck der Schmelze reduziert

wird. Demgegenüber wirken Gleitmittel überwiegend in der Polymerschmelze und setzen die internen Reibungskräfte herab, wodurch die Schmelze auch bei hohen Füllstoffgehalten einen guten plastischen Fluß behält, der für die Ausfüllung des formgebenden Werkzeugs von Bedeutung ist.

In einer Ausführungsform der vorliegenden Erfindung werden als Gleit- bzw. Trennmittel bei 20°C feste oder flüssige Calciumsalze und/oder Magnesiumsalze und/oder Aluminiumsalze eingesetzt, die ausgewählt sind aus

- Calciumsalzen von gesättigten oder ungesättigten, geradkettigen oder verzweigten Monocarbonsäuren mit 6 bis 36 C-Atomen,
- Calciumsalzen der unsubstituierten oder mit $C_{1-4}$-Alkylresten substituierten Benzoesäure,
- Magnesiumsalzen von gesättigten oder ungesättigten, geradkettigen oder verzweigten Monocarbonsäuren mit 6 bis 36 C-Atomen,
- Magnesiumsalzen von gesättigten oder ungesättigten Dicarbonsäuren mit 6 bis 10 C-Atomen,
- Aluminiumsalzen von gesättigten oder ungesättigten, geradkettigen oder verzweigten Monocarbonsäuren mit 6 bis 36 C-Atomen

Für die vorstehend genannten Calcium-, Magnesium- und Aluminiumsalze gilt, daß sie sowohl allein als auch in Mischung eingesetzt werden könnten.

Weitere Gleit- bzw. Trennmittel, die alleine oder in Kombination miteinander eingesetzt werden können, sind die hierfür einschlägig aus dem Stand der Technik bekannten Substanzen. Vorzugsweise kommen folgende Verbindungstypen in Frage: Kohlenwasserstoffwachse, die im Temperaturbereich von 70 bis 130°C schmelzen, oxidierte Polyethylenwachse, freie Fettsäuren mit 8 bis 22 C-Atomen und deren verzweigtkettige Isomere, beispielsweise Stearinsäure oder auch Hydroxystearinsäure, α-Olefine, Wachsester, d. h. Ester aus längerkettigen Monocarbonsäuren und Monoalkoholen, primäre und sekundäre, gesättigte und ungesättigte höhere Alkohole mit vorzugsweise 16 bis 44 C-Atomen im Molekül, Ethylendiamindistearat, Montansäureester von Diolen, beispielsweise von Ethandiol, 1,3-Butandiol und Glycerin, Mischungen derartiger Montansäureester mit unveresterten Montansäuren, Partialester aus Fettsäuren mit 8 bis 22 C-Atomen und Polyolen mit 2 bis 6 C-Atomen und 2 bis 6 Hydroxylgruppen, die pro Molekül im Durchschnitt mindestens eine freie Polyol-Hydroxylgruppe enthalten. Einsetzbar sind weiterhin die in der **DE-C-19 07 768** beschriebenen Mischester mit Hydroxyl- bzw. Säurezahlen im Bereich von 0 bis 6 aus aliphatischen, cycloaliphatischen oder aromatschen Dicarbonsäuren mit 2 bis 22 C-Atomen im Molekül, aliphatischen Polyolen mit 2 bis 6 Hydroxylgruppen im Molekül und aliphatischen Monocarbonsäuren mit 12 bis 30 C-Atomen im Molekül. Beispiele hierfür sind Mischester aus Maleinsäure-Pentaerythrit-Behensäure, Mischester aus Adipinsäure-Pentaerythrit-Ölsäure und Mischester aus Adipinsäure-Pentaerythrit-Stearinsäure. Derartige Gleit- oder Trennmittel können im Rahmen der vorliegenden Erfindung sowohl einzeln, als auch in Kombination miteinander, sowie auch in Kombination mit dem oben genannte Calcium-, Magnesium- oder Aluminiumsalzen eingesetzt werden.

**Weichmacher.** Im Hinblick auf Weichmacher sei ausdrücklich auf Seite 29, Zeile 20 bis Seite 30, Zeile 26, der oben zitierten EP-A-768 336 verwiesen. Die dort genannten Weichmacher werden in die Offenbarung der vorliegenden Erfindung ausdrücklich mit einbezogen.

**Epoxidierte Fettsäureester.** Im Hinblick auf Beispiele für geeignete Verbindungen dieser Klasse sei ausdrücklich auf Seite 31, Zeile 27 bis Seite 31, Zeile 32, der oben zitierten EP-A-768 336 verwiesen. Die dort genannten epoxidierten Fettsäureester werden in die Offenbarung der vorliegenden Erfindung ausdrücklich mit einbezogen.

**UV-Absorber und Lichtschutzmittel.** Im Hinblick auf Beispiele für geeignete Verbindungen dieser Klasse sei ausdrücklich auf Seite 33, Zeile 6 bis Seite 34, Zeile 7, der oben zitierten EP-A-768 336 verwiesen. Die dort genannten UV-Absorber und Lichtschutzmittel werden in die Offenbarung der vorliegenden Erfindung ausdrücklich mit einbezogen.

Im Rahmen der vorliegenden Erfindung sind folgende Kunststoffadditive besonderes bevorzugt:

- **1-Aminoethyl-2-oleylimidazolin** (kommerziell erhältlich als "Casamin O", Fa. Thomas Swan / GB)
- **Umsetzungsprodukt von Tallölfettsäure mit Triethylentetramin** (kommerziell erhältlich als "Genamid 490", Fa. Cognis / DE)
- **Fettsäureamide,** die ausgewählt sind aus der Klasse der Verbindungen der allgemeinen Struktur **(I)**,

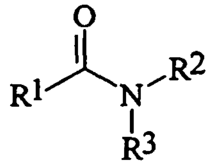

(I)

worin der Rest $R^1$ einen gesättigten oder ungesättigten Alkylrest mit 5 bis 21 C-Atomen, die Reste $R^2$ und $R^3$ - unabhängig voneinander - Wasserstoff oder Alkylreste mit 1 bis 18 C-Atomen, die mit jeweils bis zu 6 OH-Gruppen, $NH_2$-Gruppen oder $C_{1-10}$-Alkylgruppen substituiert sein können und bei denen bis zu drei Methylengruppen, die einander nicht unmittelbar benachbart sind, durch Sauerstoff ersetzt sein können, bedeuten. Laurinsäurediethanolamid (kommerziell erhältlich als "Comperlan LD", Fa. Cognis / DE) ist als Verbindung (I) besonders bevorzugt.

Diese genannten besonders bevorzugten Additive können gewünschtenfalls in Kombination mit den oben genannten Übergangsmetallverbindungen c) eingesetzt werden.

Zur formgebenden Verarbeitung

Der Einsatz der Mischung enthaltend die Komponenten a), b) und gegebenfalls c) erfolgt durch übliche und dem Fachmann wohlvertraute formgebende Verarbeitungstechniken wie Extrusions-, Kalandrier-, Spritzguß, Blasformverfahren und dergleichen. Dabei ist es im Rahmen der Lehre der vorliegenden Erfindung bevorzugt, wenn im Zuge der formgebenden Verarbeitung die Schmelze der Mischung enthaltend die Komponenten a), b) und gegebenenfalls c) mit Sauerstoff - insbesondere Luftsauerstoff - in Kontakt kommt. Dies ist beispielweise beim Extrudieren dann der Fall, wenn die Schmelze den Extruder durch die Austrittsdüse verläßt. Die genannte bevorzugte Ausführungsform ermöglicht, daß - gegebenenfalls katalytisch unterstützte - oxidative Prozesse sowie weitere Sekundärreaktionen stattfinden können. Dabei kann (Luft-)Sauerstoff einerseits an der Oberfläche selbst wirken, andererseits auch im Inneren des Kunststoffs - insbesondere in Oberflächen-nahen Bereichen -, wohin er durch Diffusion gelangen kann.

Sofern die formgebende Verarbeitung der Mischung der Komponenten a), b) und gegebnenfalls c) durch Extrusion geschieht, kühlt man den Polypropylenformkörper unmittelbar nach dem Verlassen der Austrittsdüse vorzugsweise innerhalb eines Zeitraums von 0,1 bis 5,0 Sekunden um maximal 50 °C ab. Hinsichtlich dieser Temperaturdifferenz von 50 °C - nachfolgend auch ΔT50 genannt - gilt also die Gleichung

$$\Delta T50 = T_{Austrittsdüse} - T_{Polypropylenoberfläche}$$

In dieser Gleichung ist unter $T_{Austrittsdüse}$ die Temperatur der Austrittsdüse des Extruders zu verstehen, unter $T_{Polypropylenoberfläche}$ die Oberflächentemperatur des extrudierten Polypropylenformkörpers zu verstehen, die berührungslos, beispielsweise unter Einsatz einschlägig bekannter Infrarot-Techniken, gemessen wird (etwa mit einem InfrarotThermometer "IR-TA/Handy 1000" der Firma Chino).

Besonders bevorzugt ist es, den Polypropylenfbrmkörper unmittelbar nach dem Verlassen der Austrittsdüse des Extruders innerhalb eines Zeitraums von 1,0 bis 5,0 Sekunden und insbesondere von 1,7 bis 5,0 Sekunden um maximal 50 °C abzukühlen.

Unter der Voraussetzung, daß der Polypropylenformkörper sich ab dem Verlassen der Austrittsdüse des Extruders mit konstanter Geschwindigkeit bewegt, kann die genannte Zeitskala in einfacher Weise in eine Entfernungsskala transformiert werden. Hierzu wird die bekannte Gleichung v = s / t (Geschwindigkeit = Wegstrecke geteilt durch Zeit) herangezogen, aus der sich durch Umformung s = v * t (Wegstrecke = Geschwindigkeit mal Zeit) ergibt, aus der man ersieht, daß Wegstrecke s (d.h. Entfernung von der Austrittsdüse) und Zeit t einander proportional sind. Der Nullpunkt der Entfernungsskala liegt definitionsgemäß unmittelbar an der Austrittsstelle der Düse.

Zur Tauchbehandlung

In einer Ausführungsform stellt man die Tauchzeit im Bereich von 5 Sekunden bis 1 Stunde ein.

Als Lösungsmittel (Solventien) kommen im Prinzip alle organischen Lösungsmittel in Betracht. In einer Ausführungsform wählt man das Solvens bei der Tauchbehandlung aus der Gruppe der aliphatischen Kohlenwasserstoffe, aromatischen Kohlenwasserstoffe, Alkohole, Ether, Ester, Säuren und Anhydride. Es ist möglich, ein einziges Solvens oder ein Gemisch unterschiedlicher Solventien einzusetzen.

Wie bereits ausgerührt enthält das Bad neben dem Lösungsmittel und der Übergangsmetallverbindung eine Verbindung d), die ein- oder mehrfach die Struktureinheit

$$-CH_2\text{-}CH{=}CH-$$

enthält. Dabei kann die C=C-Doppelbindung cis- oder trans-konfiguriert sein. Das Bad kann ein oder mehrere der Verbindungen d) enthalten. Insbesondere wählt man die Verbindungen d) aus der Gruppe 1-Aminoethyl-2-oleylimidazolin und Umsetzungsprodukt von Tallölfettsäure mit Triethylentetramin.

Die Temperatur der Tauchbehandlung wird vorzugsweise auf Werte im Bereich von 0 bis 60 °C eingestellt.

Zur Temperaturbehandlung

In einer Ausführungsform führt man die Temperaturbehandlung im Bereich von 100 bis 160 °C durch.
Die Dauer der Temperaturbehandlung wird vorzugsweise auf Werte im Bereich von 5 bis 100 Sekunden eingestellt.

Allgemeines zum Verfahren

Tauchen und Tempern sind in der genannten Reihenfolge durchzuführen. Die beiden Schritte müssen jedoch nicht unmittelbar hintereinander erfolgen. Vielmehr kann es gewünscht sein, die getauchten Formkörper zunächst zu trocknen (z.B. mittels Zellstofftüchern) und erst dann dem Tempern zu unterwerfen. Ein Trocknen ist jedoch nicht zwingend erforderlich.

## Beispiele

### 1. Eingesetzte Materialien

#### 1.1. Polypropylen (a)

**PP** = Hostalen PPU 1080F (Polypropylen; Handelsprodukt der Firma Hoechst / DE)

#### 1.2. Kunststoffadditiv (b)

**Comperlan LD** = Laurinsäurediethanolamid (Handelsprodukt der Fa. Cognis / DE)
**Genamid 490** = Umsetzungsprodukt von Tallölfettsäure mit Triethylentetramin; kommerziell erhältlich als "Genamid 490" (Handelsprodukt der Fa. Cognis / DE)

#### 1.3. Übergangsmetallvebindung

**Cu Soligen** = "Soligen Kupfer 8" (handelsübliches Produkt der Firma Borchers / DE; Kupfer liegt in dieser Angebotsform in der Oxidationsstufe +2 vor)

#### 1.4. Tauchmedium

Als Tauchmedium wurde folgendes Gemisch - in Tabelle 1 als "Badmix" bezeichnet - eingesetzt:

- 69 Gew.-% n-Hexan,
- 30 Gew.-% Genamid 490
- 1 Gew.-% Cu-Soligen

### 2. Herstellung der Polypropylen-Formkörper

wurden zunächst Polypropylen-Bänder hergestellt. Dazu wurden jeweils

- 600 g Polypropylen-Granulat a) und
- Additiv b) und gegebenenfalls
- Übergangsmetall-Verbindung c)

vermengt. Art und Menge der jeweils eingesetzten Komponenten b) und c) ist jeweils der Tabelle 1 zu entnehmen (erste Spalte). Diese Mischungen wurden durch einen Trichter in einen Extruder eingebracht. Eingesetzt wurde dabei ein Doppelschneckenextruder DSK 42/7 der Firma Brabender OHG (Duisburg). Ein Extruder ist - wie dem Fachmann hinlänglich bekannt - eine Kunststoff-Verarbeitungsmaschine, welche zum kontinuierlichen Mischen und Plastifizieren sowohl von pulver- als auch granulatförmigen Thermoplasten geeignet ist. Unter dem Einfülltrichter befindet sich neben einer Wasserkühlung, die ein verfrühtes Schmelzen des Granulates bzw. Pulvers verhindern soll, auch eine gegenläufige Doppelschnecke, die der Länge nach in drei Heizzonen aufgeteilt ist. Die Temperatur der Heizzonen und die Drehzahl der Doppelschnecke lassen sich über einen Datenverarbeitungs-Plast-Corder PL 2000 regeln, der über eine PC-Schnittstelle mit dem Extruder verbunden is. Für die Herstellung der Polypropylenbänder wurden die folgenden Temperaturen eingestellt: Heizzonen I-III jeweils 230°C, wobei die drei Heizzonen luftgekühlt waren, um die Temperaturen konstant zu halten.

Das Polypropylen-Granulat inclusive der jeweiligen Komponenten b) und gegebenenfalls c) wurde automatisch durch die gegeneinander laufende Doppelschnecke in den Extruder eingezogen und entlang der Schnecke befördert. Die Drehzahl betrug dabei 50 Umdrehungen pro Minute. Dadurch war eine relativ lange Verweilszeit im Extruder und dementsprechend eine gute Durchmischung und Homogenisierung gewährleistet. Diese homogene und praktisch bläschenfreie Mischung gelangte schließlich in eine Düse, die eine vierte Heizzone darstellt. Die Temperatur dieser Austrittsdüse betrug 250 °C.

Nach dem Austritt aus der Düse floß die heiße Mischung auf ein Transportband, dessen Geschwindigkeit so eingestellt wurde, daß beim Abkühlen an der Luft ein glattes und gleichmäßig dickes und breites Band entstand. Bei den hier beschriebenen Arbeiten wurde die Geschwindigkeit so eingestellt, daß das Polypropylenband etwa 35 mm breit und etwa 0,35 mm dick war. Dieses Material wurde anschließend einer Tauchbehandlung und dann einer Temperaturbehandlung (Tempern) unterworfen. Nähere Einzelheiten hierzu sowie zu den parallel durchgeführten Vergleichsversuchen sind Tabelle 1 zu entnehmen.

Aus dem erhaltenen Material wurden quadratische Prüfkörper (25 x 25 mm) ausgestanzt und für die unten näher beschriebenen Klebeversuche eingesetzt.

### 3. Klebe- und Zerreiß-Versuche

### 3.1. Herstellung der Prüflinge

Die gemäß 2) hergestellten extrudierten und anschließend 2-stufig nachbehandelten Bänder wurden 24 Stunden bei Raumtemperatur (20 °C) gelagert. Anschließend wurden quadratische Polypropylenstücke von 25 x 25 mm zwischen zwei Holzbrettchen mit den Maßen 100 x 25 mm verklebt. Die Verklebung hatte dabei eine Dicke von 2 mm. Die Klebefläche betrug exakt 25 x 25 = 625 $mm^2$. Es sei darauf hingewiesen, daß die Versuchsanordnung der entspricht, die auf S. 21 der oben genannten WO 98/42776 skizziert wurde.

Als Klebstoff wurde ein Zweikomponentenklebstoff eingesetzt (Polyurethan-Kleber "Makroplast" der Firma Henkel KGaA/Düsseldorf). Dazu wurden in einer Aluminiumschale die beiden Reaktivkomponenten (Harz = UK 8109; Härter = UK 5400) im Verhältnis Harz : Härter von 5:1 angerührt. Die Topfzeit betrug etwa 1 Stunde.

Nach etwa 1-stündiger Lagerung wurden von jedem Band Streifen mit einer Breite von 25 mm abgeschnitten und mit Hilfe einer Schablone zwischen zwei Holzbrettchen beidseitig verklebt. Es wurden dabei 5 Verklebungen von jedem Kunststoffband angefertigt. Die Verwendung einer Schablone garantierte dabei die Einhaltung der gewünschten Klebefläche zwischen dem modifiziertem Kunststoff und den Brettchen. Zur Fixierung des Prüflings wurden dabei Holzklammem verwendet. Überschüssiger Kleber wurde entfernt.

### 3.2. Zerreiß-Versuche

Die gemäß 3.1.) hergestellten Prüflinge wurden 3 Tage bei 20 °C gelagert, um sicherzustellen, daß der Zweikomponentenklebstoff völlig ausgehärtet war. Zur Messung der Zugscherkräfte wurde anschließend eine Universalprüfmaschine der Firma Zwick verwendet. Die Geschwindigkeit, mit der der Prüfling auf Zug beansprucht wurde, betrug 15 mm/min. Die verklebten Holzspatel (= Prüflinge) wurden in die Klemmbacken der Universalprüfmaschine eingespannt und mit der vorgegebenen Prüfgeschwindigkeit auseinandergezogen. Dabei wurde sichergestellt, daß die Prüflinge stets senkrecht und exakt in der Mitte des Prüfgerätes angeordnet waren. Die erzielten Versuchsergebnisse sind in der Tabelle 1 zusammengestellt (letzte Spalte). Samtliche Ergebnisse sind Mittelwerte aus jeweils 5 Versuchen.

**Tabelle 1**

| Nr. | PP + Additiv | Tauchen | Tempern | ZSG-Wert |
|---|---|---|---|---|
| V1a | 99% PP<br>1 % Comperlan LD | nein | nein | 0,48 |
| V1b | 99% PP<br>1% Comperlan LD | ja | nein | 0,67 |
| B1 | 99% PP<br>1% Comperlan LD | **ja** | **ja** | **4,26** |
| V2a | 99% PP | nein | nein | 1,16 |

Tabelle fortgesetzt

| Nr. | PP + Additiv | Tauchen | Tempern | ZSG-Wert |
|---|---|---|---|---|
| | 0,94% Comperlan LD<br>0,06 % Cu-Soligen | | | |
| V2b | 99% PP<br>0,94% Comperlan LD<br>0,06 % Cu-Soligen | ja | nein | 1,20 |
| B2 | 99% PP<br>0,94% Comperlan LD<br>0,06 % Cu-Soligen | ja | ja | 6,34 |

zur Tabelle
**erste Spalte:** Versuchs-Nummer (B= erfindungsgemäB; V=Vergleich); V1a, V1b, V2a und V2b sind Vergleichsbeispiele; B 1 und B2 sind erfindungsgemäße Beispiele; **zweite Spalte:** PP = Polypropylen; die Mengenangaben der ersten Spalte sind Gew.-% (bezogen auf die gesamte Mischung); **dritte Spalte:** 45 Minuten Tauchen bei 25 °C in der oben genannten Mischung "Badmix"; **vierte Spalte:** 5 Minuten Tempern bei 150 °C; **letzte Spalte:** ZSG-Wert = Wert der Zugscherfestigkeit, ermittelt bei den Zerreiß-Versuchen. Die Angaben sind in Newton pro Quadratmillimeter.

**Patentansprüche**

**1.** Verfahren zur Herstellung von Polypropylen-basierten Formkörpern, Fasern und Folien, wobei man eine Mischung enthaltend

a) überwiegend ein oder mehrere Polypropylene und
b) 0,01 bis 5 Gew.-% - bezogen auf die Polypropylene - ein oder mehrere Kunststoff-Additive und
c) 0 oder 0,1 bis 1000 ppm ein oder mehrere Übergangsmetallverbindungen - Metallgehalt der Übergangsmetallverbindungen bezogen auf die Polypropylene -

bei Temperaturen im Bereich von 180 bis 330 °C auf übliche Weise einer fonngebenden Verarbeitung unterwirft und die auf diese Weise hergestellten Formkörper, Fasern und Folien anschließend einer 2-stufigen Nachbehandlung unterwirft, indem man die Formkörper, Fasern und Folien

• zunächst einer Tauchbehandlung in einem Bad enthaltend mindestens ein organisches Lösungsmittel und 0,1 bis 100 Gew.-% -bezogen auf die Gesamtmenge des Lösungsmittels - mindestens einer Verbindung d), die ein- oder mehrfach die Struktureinheit $-CH_2-CH=CH-$ enthält und 0,01 bis 5 Gew.-% - bezogen auf die Gesamtmenge des Lösungsmittels - mindestens einer Übergangsmetallverbindung

und anschließend

• einer Temperaturbehandlung

unterzieht.

**2.** Verfahren nach Anspruch 1, wobei man die Tauchzeit im Bereich von 5 Sekunden bis 1 Stunde einstellt.

**3.** Verfahren nach Anspruch 1 oder 2, wobei man das Solvens bei der Tauchbehandlung auswählt aus der Gruppe der aliphatischen Kohlenwasserstoffe, aromatischen Kohlenwasserstoffe, Alkohole, Ether, Ester, Säuren und Anhydride.

**4.** Verfahren nach einem der Ansprüche 1 bis 3, wobei man die Temperatur der Tauchbehandlung auf Werte im Bereich von 0 bis 60 °C einstellt.

**5.** Verfahren nach einem der Ansprüche 1 bis 4, wobei die Verbindung d) ausgewählt ist aus der Gruppe 1-Aminoethyl-2-oleylimidazolin und Umsetzungsprodukt von Tallölfettsäure mit Triethylentetramin.

**6.** Verfahren nach einem der Ansprüche 1 bis 5, wobei man die Temperaturbehandlung im Bereich von 100 bis 160 °C durchführt.

**7.** Verfahren nach einem der Ansprüche 1 bis 6, wobei man die Dauer der Temperaturbehandlung auf Werte im Bereich von 5 bis 100 Sekunden einstellt.

## Claims

**1.** Process for the production of polypropylene-based mouldings, fibres and films, **characterized in that** a mixture containing

a) predominantly one or more polypropylenes and
b) 0.01 to 5% by weight - based on the polypropylenes - of one or more additives for plastics and
c) 0 or 0.1 to 1,000 ppm of one or more transition metal compounds - metal content of the transition metal compounds, based on the polypropylenes -

is subjected to a moulding process in the usual way at temperatures of 180 to 330°C and the mouldings, fibres and films thus obtained are aftertreated in two stages by subjecting

• the mouldings, fibres and films first to an immersion treatment in a bath containing at least one organic solvent and 0.1 to 100% by weight - based on the total quantity of solvent - of at least one compound d) which contains the structural unit $-CH_2-CH=CH-$ one or more times and 0.01 to 5% by weight, based on the total quantity of solvent - of at least one transition metal compounds

and

• then to a heat treatment.

**2.** Process as claimed in claim 1, **characterized in that** the immersion time is between 5 seconds and 1 hour.

**3.** Process as claimed in claim 1 or 2, **characterized in that** the solvent used in the immersion treatment is selected from the group consisting of aliphatic hydrocarbons, aromatic hydrocarbons, alcohols, ethers, esters, acids and anhydrides.

**4.** Process as claimed in any of claims 1 to 3, **characterized in that** the immersion treatment is carried out at a temperature of 0 to 60°C.

**5.** Process as claimed in any of claims 1 to 4, **characterized in that** the compound d) is selected from the group consisting of 1-aminoethyl-2-oleyl imidazoline and the reaction product of tall oil fatty acid with triethylene tetramine.

**6.** Process as claimed in any of claims 1 to 5, **characterized in that** the heat treatment is carried out at temperatures of 100 to 160°C.

**7.** Process as claimed in any of claims 1 to 6, **characterized in that** the heat treatment is carried out for 5 to 100 seconds.

## Revendications

**1.** Procédé de préparation d'articles moulés, de fibres et de feuilles à base de polypropylène, selon lequel on soumet un mélange contenant :

a) principalement un ou plusieurs polypropylènes,
b) de 0,01 à 5 % en poids - par rapport aux polypropylènes - d'un ou plusieurs additifs de synthèse et
c) 0 ou de 0,1 à 1000 ppm d'un ou plusieurs composés de métaux de transition - la teneur en métal des composés

de métaux de transition s'entendant par rapport aux polypropylènes -

à un traitement de formage, de manière habituelle à des températures allant de 180 à 330°C" puis on soumet les articles moulés, fibres et feuilles ainsi obtenus, à un traitement ultérieur en deux étapes, les soumettant

- tout d'abord à un traitement d'immersion dans un bain contenant au moins un solvant organique et de 0,1 à 100 % en poids - par rapport à la quantité totale de solvant - d'au moins un composé d) qui contient une ou plusieurs fois l'unité structurale $-CH_2-CH=CH-$ et de 0,01 à 5 % en poids - par rapport à la quantité totale de solvant - d'au moins un composé de métal de transition, et ensuite
- à un traitement thermique.

**2.** Procédé selon la revendication 1, selon lequel on règle la durée d'immersion dans une plage allant de 5 secondes à 1 heure.

**3.** Procédé selon la revendication 1 ou 2, selon lequel le solvant mis en oeuvre dans le traitement d'immersion est choisi dans le groupe des hydrocarbures aliphatiques, des hydrocarbures aromatiques, des alcools, des éthers, des esters, des acides et des anhydrides.

**4.** Procédé selon l'une des revendications 1 à 3, selon lequel on règle la température du traitement d'immersion à des valeurs situées dans une plage allant de 0 à 60 °C.

**5.** Procédé selon l'une des revendications 1 à 4, selon lequel le composé d) est choisi dans le groupe formé par la 1-aminoéthyl-2-oléylimidazoline et le produit de la réaction de l'acide gras de tall oil avec la triéthylènetétramine.

**6.** Procédé selon l'une des revendications 1 à 5, selon lequel on effectue le traitement thermique dans une plage allant de 100 à 160 °C.

**7.** Procédé selon l'une des revendications 1 à 6, selon lequel on règle la durée du traitement thermique dans une plage allant de 5 à 100 secondes.